Europäisches Patentamt

European Patent Office

Office européen des brevets

(11) Numéro de publication : **0 095 542**
**B1**

(12) **FASCICULE DE BREVET EUROPÉEN**

(45) Date de publication du fascicule du brevet :
09.07.86

(21) Numéro de dépôt : 82630058.4

(22) Date de dépôt : 28.05.82

(51) Int. Cl.⁴ : **B 65 D 81/34**, B 65 B 29/02,
A 47 G 19/16

(54) **Procédé et dispositif de fabrication de sachets-filtres pour infusions végétales.**

(43) Date de publication de la demande :
07.12.83 Bulletin 83/49

(45) Mention de la délivrance du brevet :
09.07.86 Bulletin 86/28

(84) Etats contractants désignés :
AT BE CH DE FR GB IT LI LU NL SE

(56) Documents cités :
CA-A- 1 002 001
DE-B- 1 153 673
GB-A-   674 886
GB-A-   789 492
US-A- 2 291 702
US-A- 3 257 212

(73) Titulaire : Goedert, Nicolas
21, Ro'dewé
L-8264 Mamer (LU)

(72) Inventeur : Goedert, Nicolas
21, Ro'dewé
L-8264 Mamer (LU)

(74) Mandataire : Dennemeyer, John James et al
Office Dennemeyer S.à.r.l. P.O. Box 41
L-2010 Luxembourg (LU)

Jouve, 18, rue St-Denis, 75001 Paris, France

## Description

La présente invention concerne un procédé et un dispositif de fabrication de sachets-filtres pour infusions. Le procédé comprend les étapes de déposer des tas dosés de produit végétal sur une bande de papier filtrant, recouvrir ces tas d'une seconde bande de papier filtrant de dimensions essentiellement égales ou voisines à celles de la première bande de papier filtrant, tout en soudant les deux bandes de papier filtrant au voisinage du pourtour complet de chaque tas, et découper les sachets-filtres ainsi réalisés par groupes d'une ou de plusieurs unités (voir GB-A-674 886).

Le dispositif de fabrication comprend une première bobine d'alimentation continue en papier filtrant, une seconde bobine d'alimentation continue en papier filtrant de dimensions essentiellement égales ou voisines à celles de la première bobine, une trémie d'alimentation reliée à une tête de distribution en produit végétal, un cylindre-doseur rotatif à alvéoles, deux cylindres rotatifs coopérants de soudage dotés de surfaces de soudage et de ventres concaves d'accueil, le cas échéant une roue de pinçage s'appuyant sur une contre-surface, un couteau rotatif de découpage transversal, une surface de décharge pour accueillir les sachets-filtres découpés, et un mécanisme d'entraînement des divers organes mobiles (voir GB-A-674 886).

A l'heure actuelle, les produits végétaux à infusionner, médicinaux ou aromatiques, tels que tisanes, thés, cafés et succédanés sont présentés au consommateur sous forme préemballée et prêts à l'usage. En particulier, ils sont présentés dans de petits sachets-filtres en papier poreux renfermant chacun une portion de produit végétal et destinés à être immergés dans la tasse ou le verre remplis d'eau bouillante. Cependant en raison de leur densité apparente inférieure à celle de l'eau, les sachets-filtres mis au contact de l'eau ont tendance à surnager, d'où il résulte une extraction des principes actifs moins efficace que s'ils restaient complètement immergés.

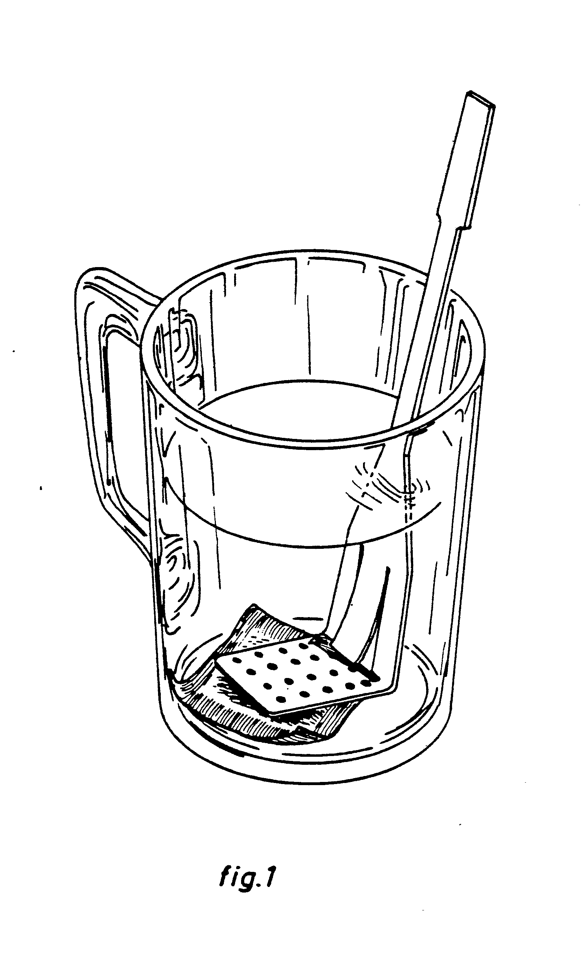

Par le passé, on a tenté de résoudre ce problème en offrant au consommateur un genre de couvert spécialement façonné sous forme de spatule-fourchette en matière plastique pliée à angle droit et munie d'une languette (voir fig. 1) qui permettait de coincer un coin du sachet-filtre entre la partie inférieure recourbée et la languette et de le maintenir au fond d'une tasse ou d'un verre remplis d'eau.

La partie recourbée de cette spatule-fourchette étant perforée, on pouvait ainsi presser doucement le sachet-filtre sur le fond du verre ou de la tasse pour en extraire tout le suc végétal. Cette solution est cependant devenue de moins en moins intéressante en raison du coût toujours croissant de ce couvert spécial. Le document GB-A-674 886 révèle un procédé de fabrication de sachets-filtres pour infusions, consistant à déposer des tas dosés de produit végétal sur une bande de papier filtrant, à recouvrir ces tas d'une seconde bande de papier filtrant de dimensions essentiellement égales à ou voisines de celles de la première bande de papier filtrant, tout en soudant les deux bandes de papier filtrant au voisinage du pourtour complet de chaque tas, et à découper les sachets-filtres ainsi réalisés.

Une autre approche du problème — conformément au brevet des Etats-Unis n° 2 291 702 — consistait en un sachet-filtre quasiment plat de forme ovoïdale et de dimensions fixes bien déterminées afin d'épouser exactement la forme de la partie concave d'une cuillère particulière, ce pour finir un ensemble possédant une grande adhérence réciproque entre le sachet-filtre et la cuillère.

Ce brevet US-A-2 291 702 montre un procédé de fabrication de sachets-filtres pour infusions au cours duquel, on munit une des bandes de papier filtrant, d'une troisième bande de papier et on soude cette dernière à cette bande au voisinage d'une portion de pourtour de chaque sachet-filtre.

Le sachet-filtre préparé par le dispositif et procédé selon l'invention est doté d'une poche suffisamment large pour accueillir une cuillère à thé ou à café ordinaire, la taille de celles-ci pouvant varier dans une certaine mesure, permet de le maintenir de manière satisfaisante dans le fond d'une tasse ou d'un verre.

Le procédé de fabrication de sachets-filtres selon l'invention se caractérise, à l'égard de celui selon GB-A-674 886, en ce que avant le découpage des sachets-filtres, on munit la seconde bande de papier filtrant d'au moins une troisième bande de papier plus étroite que les deux premières, tout en soudant la troisième et les éventuelles autres bandes de papier à la seconde bande de papier filtrant au voisinage d'une portion de pourtour de chaque tas, cette troisième bande de papier étant amenée longitudinalement à la deuxième bande de papier et recouvrant partiellement cette dernière de manière à former une poche.

Le dispositif de fabrication de sachets-filtres selon l'invention se caractérise à l'égard de celui selon GB-A-674 886, en ce qu'il renferme, en outre au moins des cylindres-tendeurs en aval de chaque bobine, le cas échéant un couteau-perforateur rotatif longitudinal coopérant avec une surface d'appui rotative, une troisième bobine d'alimentation en papier continue, de largeur réduite par rapport aux deux premières bobines et animée d'un mouvement de rotation par le mécanisme d'entraînement, et au besoin un cylindre-dévieur en aval de la troisième bobine, celle-ci étant conçue et aménagée de sorte à pouvoir munir la bande de papier issue de la seconde bobine d'alimentation d'au moins une bande de papier plaquée extérieurement ne couvrant qu'une partie de la largeur de la seconde bande de papier, et de façon à n'être soudée sur cette bande de papier porteuse que sur une portion de pourtour au voisinage de chaque tas de produit végétal pris en sandwich entre les deux premières bandes de papier et que cette troisième bande de papier forme une poche.

Pour que l'invention puisse être mieux comprise référence est faite aux dessins accompagnant dans lesquels

la figure 1 représente un mode de réalisation connu dans la technique de sachet-filtre et de spatule-fourchette spéciale nécessaire pour maintenir le sachet-filtre au fond du récipient.

les figures 2 et 3 représentent deux vues différentes d'un sachet-filtre fabriqué selon l'invention ;

la figure 4 montre le principe d'utilisation d'un sachet-filtre fabriqué selon l'invention ;

les figures 5 et 6 représentent deux vues différentes d'une unité de sachets-filtres couplés fabriquée selon l'invention ;

la figure 7 représente une vue d'un autre sachet-filtre fabriqué selon l'invention ;

la figure 8 représente une vue d'une autre unité de sachets-filtres couplés ;

la figure 9 représente le schéma du procédé de fabrication perfectionné de l'unité de sachets-filtres des figures 4 et 5 ;

la figure 10 représente un dispositif de fabrication perfectionné permettant de fabriquer l'unité de sachets-filtres des figures 4 et 5 ;

la figure 11 représente un dispositif de fabrication perfectionné permettant de fabriquer le sachet-filtre des figures 2 et 3.

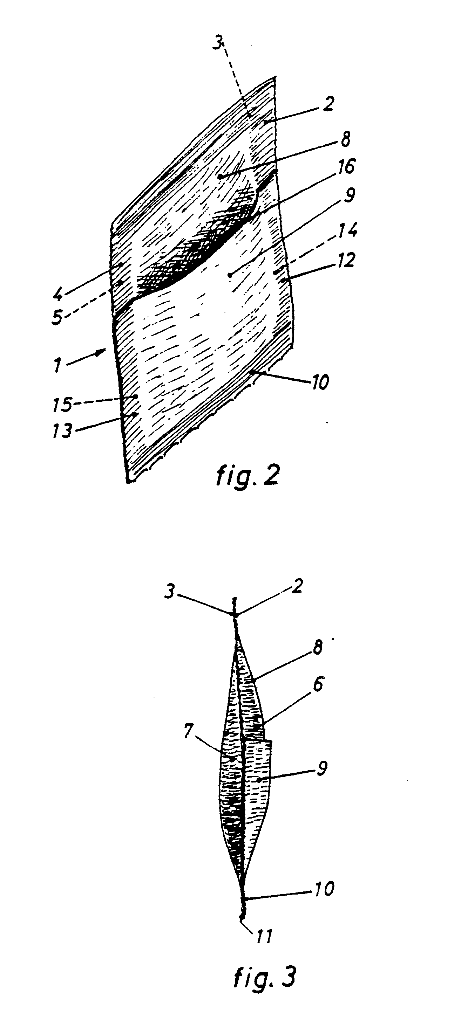

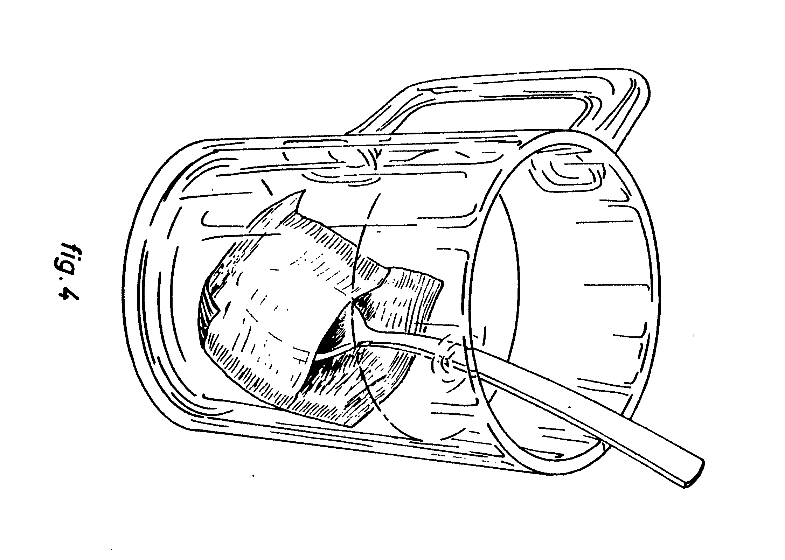

Les figures 2 et 3 représentent un mode de réalisation préféré de l'invention. Sur ces figures, un sachet-filtre 1 renferme deux feuilles 2, 3 en papier poreux accolées face à face par le biais de leurs bords respectifs 4, 5, l'ensemble accusant un double ventre 6, 7 rempli des plantes médicinales ou aromatiques à infusionner. La face frontale 8 du sachet-filtre est munie d'une poche 9 en papier poreux dont le bord inférieur 10 est soudé au bord inférieur 11 du sachet, et les bords latéraux 12, 13 sont soudés aux bords latéraux 14, 15 du sachet. Le bord supérieur 16 de la poche est libre et peut être écarté du ventre du sachet, celui-ci se pliant légèrement de ce fait. Ainsi, on peut introduire la partie inférieure d'une cuillère à thé ou à café dans la poche en question (voir figure 4), ce qui permet de maintenir le sachet dans le fond de la tasse ou du verre sous l'effet du poids de la cuillère.

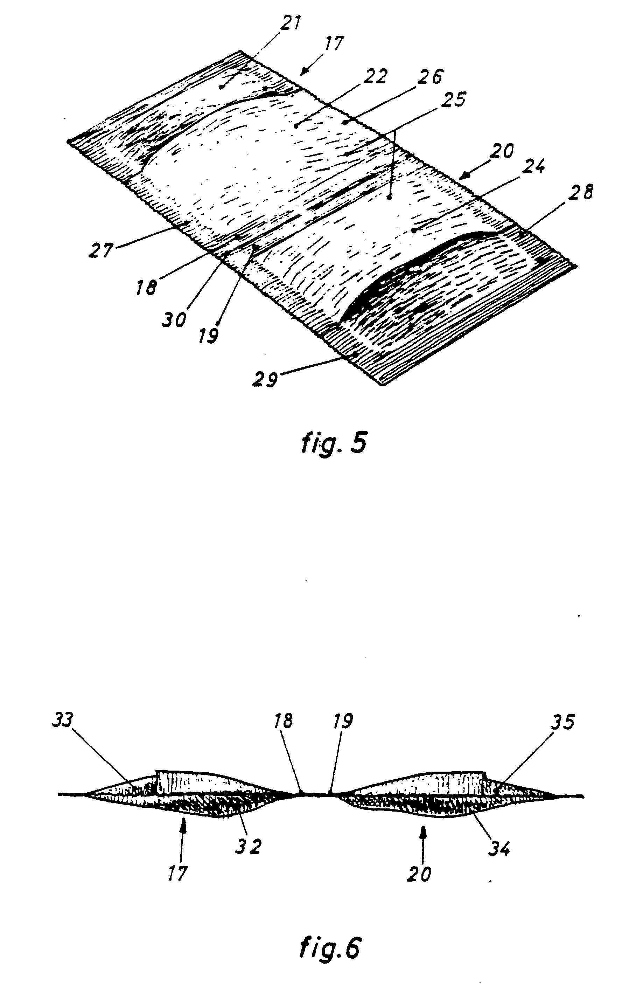

Les figures 5 et 6 représentent un autre mode de réalisation préféré de l'invention. Sur ces figures, un premier sachet-filtre 17 ayant un double-ventre 32, 33 est relié par son bord inférieur 18 au bord inférieur 19 d'un second sachet-filtre 20 ayant un double ventre 34, 35. La face frontale 21 du premier sachet-filtre est munie d'une poche 22 et la face frontale 23 du second sachet-filtre est munie d'une poche 24, ces deux poches étant constituées d'une feuille commune 25 dont une portion couvre le premier sachet et une autre portion couvre le second sachet. La partie médiane de cette feuille est laminée sur la région des deux bords inférieurs juxtaposés 18, 19, tandis que les bords latéraux 26, 27 de cette feuille sont laminés de part et d'autre sur les bords latéraux respectifs 28, 29 des deux sachets couplés. La liaison entre les bords inférieurs juxtaposés 18, 19 des deux sachets est affaiblie, p. ex. par des perforations 30, ce qui permet de séparer les deux sachets-filtres de manière aisée en vue de leur utilisation par le consommateur. Séparés ou considérés individuellement, chacun des deux sachets-filtres ressemble au sachet-filtre du premier mode de réalisation, et se comporte comme celui-ci.

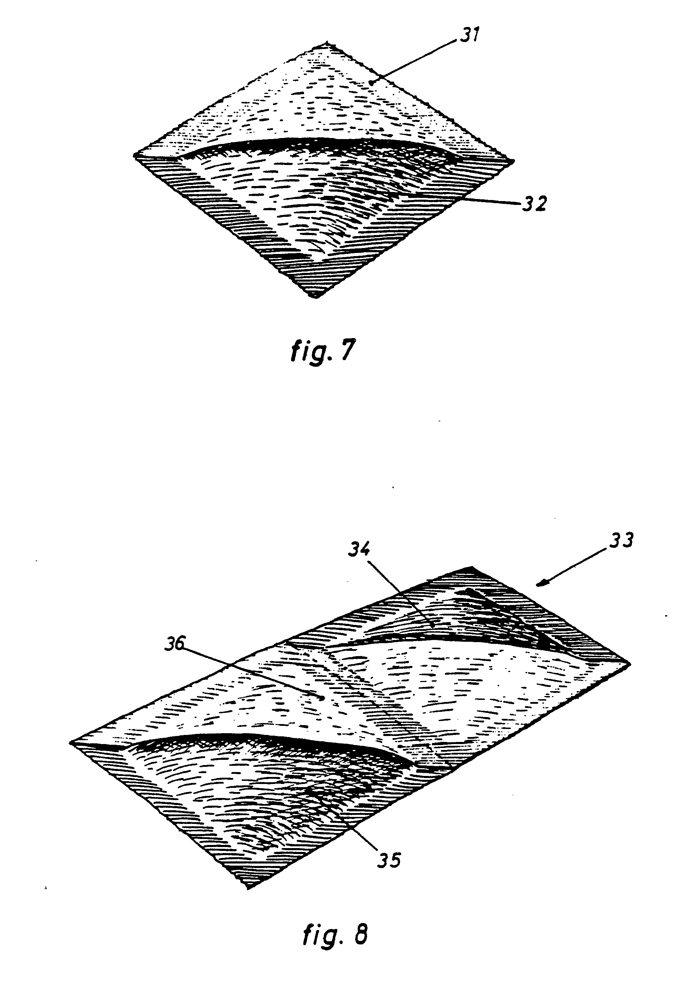

La figure 7 représente un autre mode de réalisation d'un sachet-filtre 31 selon l'invention semblable à celui de la figure 2, mais le sachet-filtre étant muni d'une poche 32 en biais.

La figure 8 représente un autre mode de réalisation d'une unité 33 de sachets-filtres couplés 34, 35 semblable à celui de la figure 5, mais l'unité étant muni d'une feuille à poches 36 en biais.

Il va de soi qu'un ou plusieurs des côtés de chaque sachet-filtre à l'état isolé peuvent avoir des arêtes en lignes courbes plutôt qu'en lignes droites.

Il est clair aussi que l'on peut envisager des unités renfermant trois ou quatre ou davantage de sachets-filtres par une combinaison judicieuse des modes de réalisation de la figure 2 et de la figure 5.

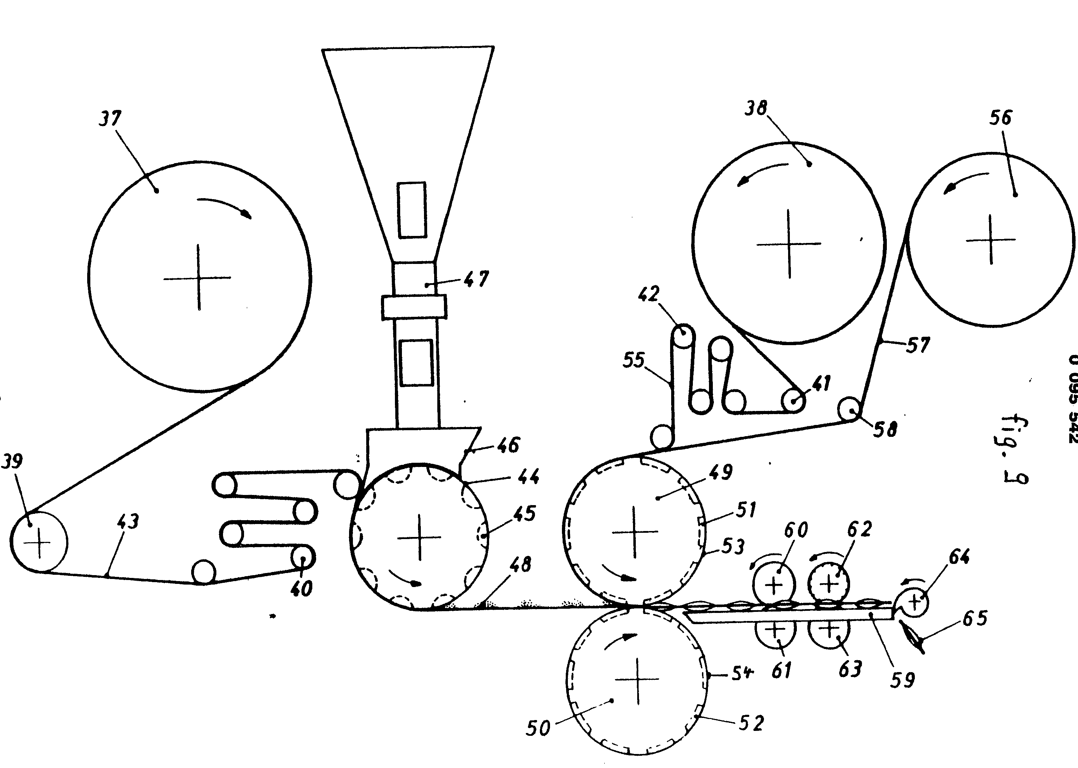

La figure 9 représente un schéma de fabrication perfectionné d'unités de sachets-filtres selon la figure 5 et 6, et la figure 10 représente un dispositif de fabrication perfectionné pour ces unités. On y voit essentiellement une première bobine 37 d'alimentation continue en papier filtrant et une deuxième bobine 38 d'alimentation en papier filtrant. En aval de chacune de ces bobines se trouvent une série de cylindres-tendeurs 39, 40, resp. 41, 42 p. ex. La première bande de papier filtrant 43 est acheminée de manière à envelopper un arc de cercle de 90° environ couvrant p. ex. le 3ᵉ quadrant trigonométrique de haut en bas d'un cylindre-doseur 44. Ce cylindre-doseur est doté de paires d'alvéoles circonférentielles 45 dans lesquelles une tête de distribution 46 dépose le produit végétal à mettre en sachet, celle-ci étant surplombée d'une trémie d'alimentation 47. Par la rotation du cylindre-doseur des tas 48 de produit végétal sont déposés sur la première bande de papier filtrant, qui est ensuite acheminée dans le pinçage d'une paire de cylindres de soudage 49, 50 coopérants conçus et disposés en image-miroir verticale. Ces cylindres de soudage ont des ventres d'accueil 51, 52 concaves et des surfaces de soudage 53, 54 chauffées par de la vapeur d'eau p. ex. La deuxième bande de papier filtrant 55 enveloppe le cylindre de soudage supérieur 49 sur un arc de cercle de 180° couvrant le 2ᵉ et 3ᵉ quadrant trigonométrique de haut en bas.

Le perfectionnement selon l'invention consiste en l'aménagement d'une troisième bobine d'alimentation continue en papier 56, acheminant une troisième bande de papier 57 déviée par un cylindre de changement de direction 58 situé en aval de manière à acheminer cette troisième bande de papier entre la deuxième bande de papier et le cylindre de soudage supérieur. La troisième bande de papier est cependant moins large que les deux autres, et elle est disposée à cheval sur la ligne médiane longitudinale des deux autres bandes de papier superposées. Par l'action des cylindres de soudage, la deuxième bande de papier est soudée sur la première bande de papier sur tout le pourtour au voisinage de chaque tas de produit végétal, et la troisième bande de papier est simultanément soudée sur la deuxième bande de papier, mais seulement sur une portion de pourtour au voisinage de chaque tas de produit végétal.

La double rangée de sachets-filtres dotés de poches ainsi formés est, comme dans l'art antérieur, acheminée sur une table 59 d'appui et elle est chevauchée sur sa ligne médiane par une roue de pinçage 60 s'appuyant sur une contre-surface 61 et un couteau-perforateur 62 rotatif longitudinal coopérant avec une surface d'appui rotative 63. Un couteau rotatif 64 de découpage transversal découpe les unités de sachets-filtres 65 couplés arrivés en fin de course sur la table.

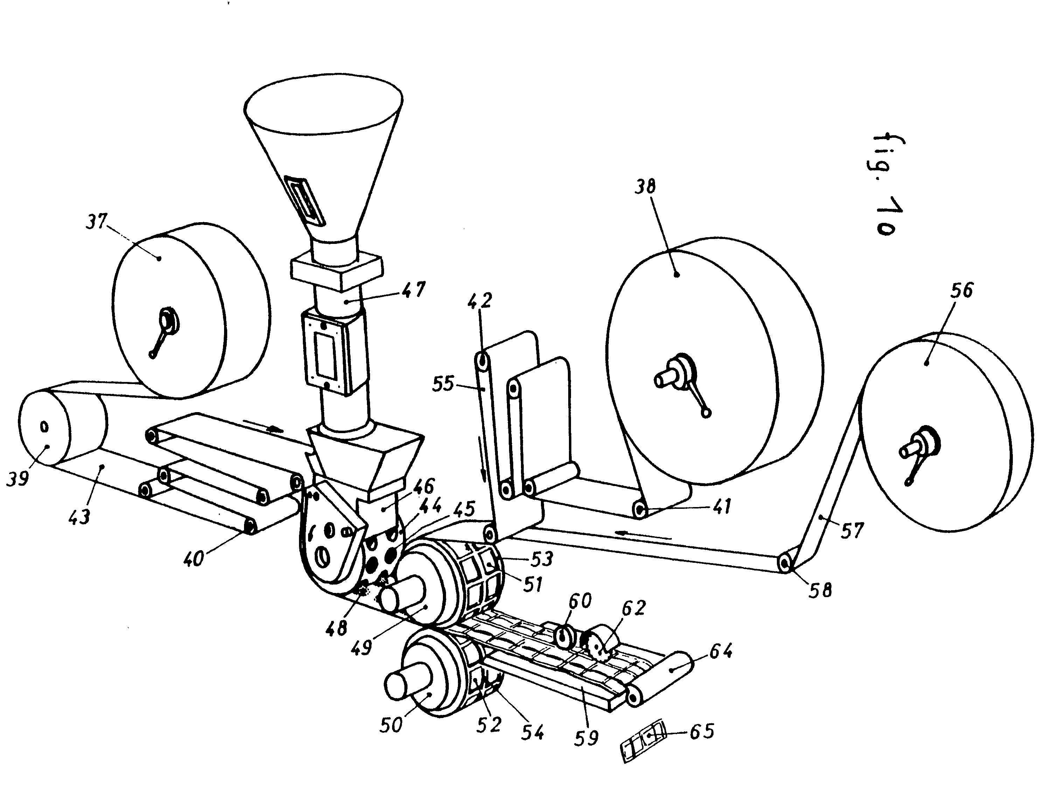

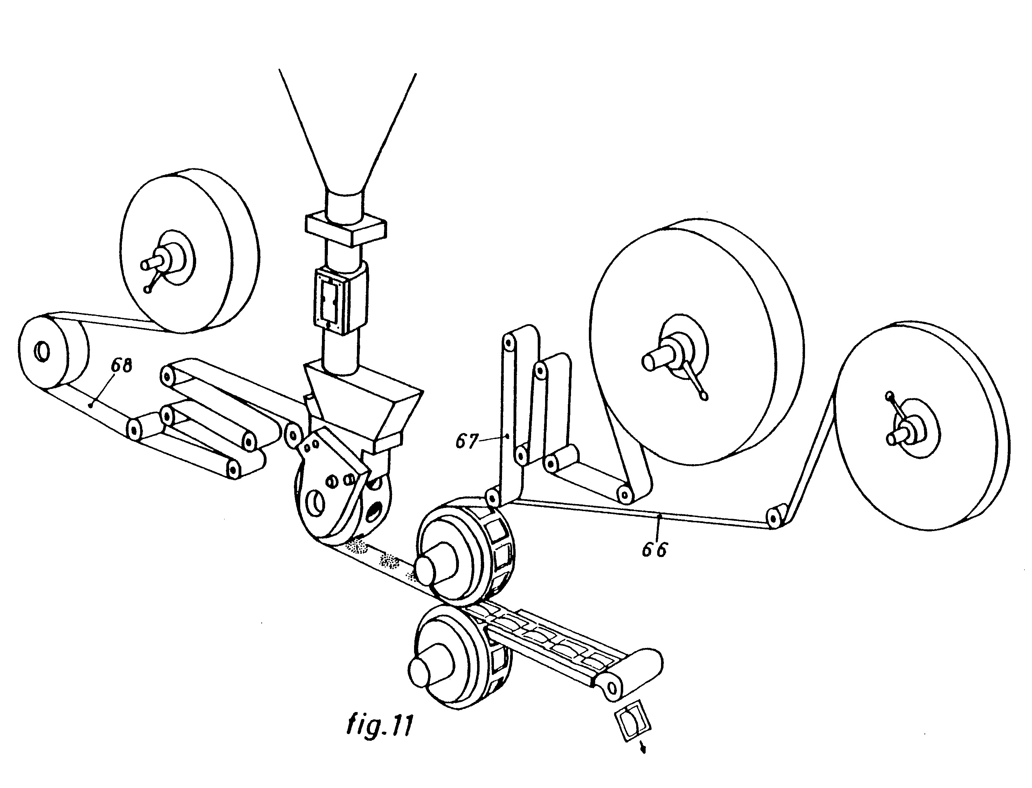

La figure 11 représente un dispositif de fabrication perfectionné de sachets-filtres isolés selon la figure 2. Ce dispositif est semblable à celui de la figure 10, sauf en ce qu'une rangée unique de sachets-filtres est formée, en ce qu'il n'y a pas de roue de pinçage ni de couteau-perforateur, et en ce que la troisième bande de papier 66 est essentiellement déplacée vers l'un des côtés longitudinaux par rapport à la ligne médiane des deux autres bandes de papier 67, 68, plutôt que de chevaucher celle-ci.

## Revendications

1. Procédé de fabrication de sachets-filtres pour infusions, comprenant les étapes de déposer des tas dosés de produit végétal sur une bande de papier filtrant, recouvrir ces tas d'une seconde bande de papier filtrant de dimensions essentiellement égales ou voisines à celles de la première bande de papier filtrant, tout en soudant les deux bandes de papier filtrant au voisinage du pourtour complet de chaque tas, et découper les sachets-filtres ainsi réalisés par groupes d'une ou de plusieurs unités caractérisé en ce que avant le découpage des sachets-filtres on munit la seconde bande de papier filtrant d'au moins une troisième bande de papier plus étroite que les deux premières, tout en soudant la troisième et les éventuelles autres bandes de papier à la seconde bande de papier filtrant au voisinage d'une portion de pourtour de chaque tas, cette troisième bande de papier étant amenée longitudinalement à la deuxième bande de papier et recouvrant partiellement cette dernière, de manière à former une poche.

2. Procédé de fabrication selon la revendication 1, caractérisé en ce que les deux opérations de soudage sont effectuées simultanément.

3. Dispositif de fabrication de sachets-filtres pour infusions renfermant une première bobine (37) d'alimentation continue en papier filtrant, une seconde bobine (38) d'alimentation continue en papier filtrant de dimensions essentiellement égales ou voisines à celles de la première bobine (37), une trémie d'alimentation (47) reliée à une tête de distribution (46) en produit végétal, un cylindre-doseur (55) rotatif à alvéoles (45), deux cylindres rotatifs coopérants de soudage (49, 50) dotés de surfaces de soudage et de ventres concaves d'accueil (51, 52), le cas échéant une roue de pinçage (60) s'appuyant sur une contre-surface (61), un couteau rotatif de découpage transversal (64), une surface de décharge pour accueillir les sachets-filtres découpés, et un mécanisme d'entraînement des divers organes mobiles, caractérisé en ce qu'il renferme, en outre, au moins des cylindres-tendeurs (39, 40 et 41, 42) en aval de chaque bobine (37 et 38), le cas échéant un couteau-perforateur (62) rotatif longitudinal coopérant avec une surface d'appui (63) rotative, une troisième bobine d'alimentation (56) en papier continue, de largeur réduite par rapport aux deux premières bobines et animée d'un mouvement de rotation par le mécanisme d'entraînement, et au besoin un cylindre-dévieur (58) en aval de la troisième bobine (56), celle-ci étant conçue et aménagée de sorte à pouvoir munir la bande de papier (55) issue de la seconde bobine d'alimentation (38) d'au moins une bande de papier (57) plaquée extérieurement ne couvrant qu'une partie de la largeur de la seconde bande de papier (55), et de façon à n'être soudée sur cette bande de papier porteuse que sur une portion de pourtour au voisinage de chaque tas (48) de produit végétal pris en sandwich entre les deux premières bandes de papier (43, 55) et que cette troisième bande (57) de papier forme une poche (9).

4. Dispositif de fabrication selon la revendication 3, caractérisé en ce qu'au moins une des bobines d'alimentation continue en papier de plaquage est conçue et aménagée de manière à disposer sa bande de papier essentiellement de part et d'autre d'une ligne longitudinale de séparation entre deux chaînes juxtaposées de tas de produit végétal.

5. Dispositif de fabrication selon la revendication 3, caractérisé en ce que la troisième bobine d'alimentation continue en papier de plaquage est conçue et aménagée de manière à disposer la majeure partie de sa bande de papier essentiellement du côté d'un bord longitudinal d'une chaîne de tas de produit végétal.

## Claims

1. Method for manufacturing infusion filterbags, comprising the steps of placing metered heaps of plant-based product on a filterpaper web, covering said heaps with a second filterpaper web having substantially or close enough the same dimensions as said first filter-paper web, while welding the two filter-paper webs in the vicinity around the complete periphery of each heap, and cutting off the filter-bags thus produced as groups of one or several units characterized in that before the cutting operation of the filter-bags, said second filterpaper web is provided with at least a third paper web narrower than the two first webs whilewelding the third paper web and possible other paper webs onto the second filterpaper web in the vicinity of a periphery portion of each heap, said third paper web being fed longitudinally with respect to the second paper web and covering partially the latter, so as to form a pocket.

2. Method of manufacturing according to claim 1, characterized in that the two welding operations are carried out simultaneously.

3. Apparatus for manufacturing infusion filter-bags comprising a first continuous-feed filter-paper spool (37), a second continuous-feed filter-paper spool (38) of substantially the same or near enough the same dimensions of said first spool (37), a feed hopper (47) connected to a distribution headbox (46) for dispensing plant-based product, a rotary metering cylinder (55) having cells (45), two rotary cooperating welding cylinders (49, 50) having welding surfaces and concave receiving cells (51, 52), if required a nipping pulley (60) pressing onto a counter-surface (61), a transverse rotary knife (64), a receiving surface for receiving the cut-off filter-bags, and a mechanism for driving the various mobile parts, characterized in that it further comprises at least tensioning cylinders (39, 40 and 41, 42) downstream of each spool (37 and 38), if required a rotary longitudinal perforating knife (62) cooperating with a rotary support surface (63), a third continuous-feed paper spool (56) of reduced width with respect to the two first spools and rotated by the driving mechanism, and if required, a deviating cylinder (58) downstream of the third spool (56), adapted to provide the filterpaper web (55) fed by said second continuous-feed spool (38) with at least one paper web (57) exteriorily attached and extending only over part of the width of the second filterpaper web (55) and in such a manner as to be welded onto said attachment web only at a portion of the periphery of each plant-based product heap (48) sandwiched between the two first filterpaper webs (43, 55) and said third paper web (57) forms a pocket (9).

4. Manufacturing apparatus according to claim 3, characterized in that at least one of said continuous-feed reduced width paper spool is adapted to position its paper web substantially in a rider position with respect to a longitudinal separation line between two adjacent rows of product heaps.

5. Manufacturing apparatus according to claim 3, characterized in that the third continuous-feed reduced width paper spool is adapted to position the greater portion of its paper web substantially towards a longitudinal edge of a row of plant-based product heaps.

## Patentansprüche

1. Verfahren zur Herstellung von Filterbeuteln für Aufgüsse, beinhaltend die Schritte, abgemessene Häufchen pflanzlichen Produkts auf ein Filterpapierband aufzubringen, diese Häufchen mit einem zweiten Filterpapierband zu bedecken, dessen Abmessungen denen des ersten Filterpapierbandes im wesentlichen gleichen oder nahekommen, wobei die beiden Filterpapierbänder in der Nähe des gesamten Umfangs jedes Häufchens miteinander verschweißt werden, und die so hergestellten Filterbeutel in Gruppen aus einer oder mehreren Einheiten abzuschneiden, dadurch gekennzeichnet, daß vor dem Abschneiden der Filterbeutel das zweite Filterpapierband mit wenigstens einem dritten Papierband versehen wird, das schmaler als die beiden ersten ist, wobei das dritte und die eventuellen weiteren Papierbänder mit dem zweiten Filterpapierband in der Nähe eines Umfangsteils jedes Häufchens verschweißt werden und wobei dieses dritte Papierband in Längsrichtung des zweiten Papierbandes zugeführt wird und dieses letztere teilweise bedeckt, so daß eine Tasche gebildet wird.

2. Herstellungsverfahren nach Anspruch 1, dadurch gekennzeichnet, daß die beiden Schweißoperationen gleichzeitig ausgeführt werden.

3. Verfahren zur Herstellung von Filterbeuteln für Aufgüsse, mit einer ersten Rolle (37) zur kontinuierlichen Versorgung mit Filterpapier, mit einer zweiten Rolle (38) zur kontinuierlichen Versorgung mit Filterpapier, deren Abmessungen denen der ersten Rolle (37) im wesentlichen gleichen oder nahekommen, mit einem Versorgungstrichter (47), der mit einem Verteilkopf (46) für pflanzliches Produkt verbunden ist, mit einem drehbaren Dosierzylinder (55) mit Kammern (45), mit zwei zusammenwirkenden drehbaren Schweißzylinder (49, 50), die mit Schweißflächen und konkaven Aufnahmekammern (51, 52) versehen sind, gegebenenfalls mit einem Klemmrad (60), das sich auf einer Gegenfläche (61) abstützt, mit einem drehbaren Querschneidmesser (64), mit einer Abgabefläche zum Aufnehmen der abgeschnittenen Filterbeutel und mit einer Antriebseinrichtung für die verschiedenen beweglichen Teile, dadurch gekennzeichnet, daß sie weiter wenigstens Spannzylinder (39, 40 und 41, 42) hinter jeder Rolle (37 und 38) aufweist, gegebenenfalls ein drehbares Längsperforiermesser (62), das mit einer drehbaren Abstützfläche (63) zusammenwirkt, eine dritte Rolle (56) zur kontinuierlichen Versorgung mit Papier, deren Breite kleiner ist als die der beiden ersten Rollen und die durch die Antriebseinrichtung in eine Drehbewegung versetzt wird, und bei Bedarf einen Ablenkzylinder (58) hinter der dritten Rolle (56), der so angeordnet und ausgebildet ist, daß das Papierband (55), das von der zweiten Versorgungsrolle (38) stammt, mit wenigstens einem außen aufgelegten Papierband (57) versehen werden kann, welches nur einen Teil der Breite des zweiten Papierbandes (55) bedeckt, und derart, daß es mit diesem tragenden Papierband nur auf einem Umfangsteil in der Nähe jedes Häufchens (48) pflanzlichen Produkts, das sich zwischen den beiden ersten Papierbändern (43, 55) befindet, verschweißt werden kann, und daß dieses dritte Papierband (57) eine Tasche (9) bildet.

4. Herstellungsvorrichtung nach Anspruch 3, dadurch gekennzeichnet, daß wenigstens eine der Rollen zur kontinuierlichen Versorgung mit Deckpapier derart ausgebildet und angeordnet ist, daß sie ihr Papierband im wesentlichen beiderseits einer Längstrennlinie zwischen zwei nebeneinander angeordneten Ketten von Häufchen von pflanzlichen Produkts anordnen kann.

5. Herstellungsvorrichtung nach Anspruch 3, dadurch gekennzeichnet, daß die dritte Rolle zur kontinuierlichen Versorgung mit Deckpapier so ausgebildet und angeordnet ist, daß der Hauptteil ihres Papierbandes im wesentlichen auf der Seite eines Längsrandes einer Kette von Häufchen pflanzlichen Produkts angeordnet wird.

fig.1

1

fig. 2

fig. 3

fig. 4

fig. 5

fig.6

4

fig. 7

fig. 8

fig. 9

fig. 10

fig.11

0 095 542